# EUROPÄISCHE PATENTSCHRIFT

(11) **EP 0 474 175 B1**
(45) Veröffentlichungstag und Bekanntmachung des Hinweises auf die Patenterteilung: **14.12.1994**
(21) Anmeldenummer: 91114812.0
(22) Anmeldetag: 03.09.1991
(51) Int. Cl.: B62D 61/12

(54) **Steuereinrichtung für die anhebbare Nachlaufachse eines Doppelachsaggregates von Nutzfahrzeugen**
Control device for the liftable trailing axle of a twin axle unit of utility vehicles
Dispositif de contrôle pour l'essieu traîné relevable d'une unité d'essieux en tandem de véhicules utilitaires

(30) Priorität: 07.09.1990 DE 4028377
(43) Veröffentlichungstag der Anmeldung: 11.03.1992
(73) Patentinhaber: Iveco Magirus Aktiengesellschaft, D-89017 Ulm (DE)
(72) Erfinder: Stürner, Johann, W-7900 Ulm (DE); Brandenstein, Heinz, W-7901 Illerrieden (DE)
(74) Vertreter: TER MEER STEINMEISTER & PARTNER GbR

(56) Entgegenhaltungen:
- DE-A- 2 323 711
- DE-A- 3 324 401
- DE-U- 8 911 010
- Berufsfahrer Bordbuch, 1983, ecomed verlagsgesellschaft mbH, Landsberg/Lech

## Beschreibung

Die Erfindung betrifft eine Steuereinrichtung für eine anhebbare Nachlaufachse eines aus blattgefederter Triebachse und blatt- oder luftgefederter Nachlaufachse bestehenden Doppelachsaggregates von Nutzfahrzeugen mit einem fahrzeugrahmenfesten lastabhängigen mechanischen Bremskraftregler zur Steuerung des Bremsdrucks des Doppelachsaggregates über ein Reglergestänge.

Aus DE-B-26 52 811 ist eine Steuereinrichtung für eine anhebbare Nachlaufachse eines Doppelachsaggregates bekannt, durch die bei Überschreiten einer stationären Einfederung ein selbsttätiges Absenken der Nachlaufachse erfolgt. Bei geringer Belastung wird die Achse selbsttätig angehoben. Die Steuereinrichtung ist vergleichsweise aufwendig getroffen und verwendet elektromechanische Schalter, wodurch ein störungsanfälliger Betrieb der Anlage gegeben ist. Für Zusatzfunktionen wie Aktivierung eines Überlastschutzes der Triebachse während eines Anfahrens des Nutzfahrzeuges ist die bekannte Steuereinrichtung weder vorgesehen noch geeignet.

Aufgabe der Erfindung ist die Schaffung einer Steuereinrichtung der eingangs genannten Art, welche mit Hilfe sehr einfacher Mittel gerade den mechanischen Teil der Steuereinrichtung ohne Verwendung zusätzlicher Aggregate zuverlässig verbessert, insbesondere in einer Weise, daß die Steuereinrichtung auch für Zusatzfunktionen geeignet ist.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 8.

Wesen der Erfindung ist, am ohnehin am Fahrzeug schon vorhandenen Bremskraftregler zumindest einen vorzugsweise elektronischen Sensor zur Steuerung der Absenkbewegung der Nachlaufachse vorzusehen, wobei der Sensor in Abhängigkeit des Drehwinkels des Reglerhebels anspricht, d.h. der Sensor bei einem bestimmten Drehwinkel des Reglerhebels betätigt wird.

Darüber hinaus wird an anderer Stelle des Bremskraftreglers ein zweiter, vorzugsweise im wesentlichen gleich ausgebildeter Sensor zur Aktivierung eines Überlastschutzes der Triebachse beim Betrieb mit Anfahrhilfe vorgesehen, der ebenfalls bei einem bestimmten (anderen) Drehwinkel des Reglerhebels anspricht bzw. betätigt wird.

Vorgenannte Sensoren sind zweckmäßigerweise in einen Schalteingriff bringbar durch eine Steuerplatte, welche am Reglerhebel oder an der Drehwelle des Reglerhebels befestigt ist. Die Steuerplatte befindet sich bevorzugt in rückwärtiger Verlängerung des Reglerhebels und ist eine einstückige , eine Steuerkurve aufweisende Drehscheibe, welche an der Drehwelle des Reglerhebels befestigt ist. Insbesondere setzt sich die Drehscheibe aus zwei abgesetzten Kreissegmenten mit unterschiedlichen Kreisradien und (dazwischenliegender) Radialstufe zusammen.

Ein besonders einfacher Aufbau mit nachträglicher Einbaumöglichkeit der Steuereinrichtung beim ohnehin vorhandenen Bremskraftregler ist gegeben, wenn die Sensoren auf einer Halteplatte angeordnet sind, welche ihrerseits in oder parallel zur Schwenkebene des Reglerhebels am Bremskraftregler befestigt ist. Bevorzugt sind die Sensoren auf der Halteplatte verstellbar und mithin die Steuereinheit sehr einfach auf jedes Fahrzeug einstellbar. Die Steuereinheit kann bei allen Dreiachsfahrzeugen mit mechanischem Bremskraftregler eingesetzt werden, unabhängig von der Art der Achsaufhängung und Lifteinrichtung der Nachlaufachse. Sie besteht aus sehr wenigen, kostengünstigen Teilen, wobei keine Verschleißteile vorgesehen sind, was mit einer großen Funktionssicherheit und langen Lebensdauer einer Steuereinheit einhergeht.

Es wird also durch die Erfindung gerade der mechanische Teil der Steuereinheit, d.h. die Anordnung der Sensorik, ohne das Erfordernis zusätzlicher Aggregate, mit verblüffend einfachen Mitteln verbessert. Am ohnehin vorhandenen Bremskraftregler des Fahrzeuges wird, beispielsweise für einen nachträglichen Einbau, eine Halteplatte mit zwei elektronischen Sensoren befestigt, welche in ihrer Lage verstellt werden können. Auf der Welle des Bremskraftreglers wird eine Drehscheibe mit einem bestimmten Profil angebracht, welches sich gemeinsam mit der Welle dreht. Die Welle des Bremskraftreglers, somit auch die Drehscheibe, nimmt bedingt durch die Einfederung der Triebachse je nach Achslast eine gewisse Winkellage ein. Die Lage der elektronischen Sensoren sowie das Profil der Drehscheibe sind so festgelegt, daß bei einem bestimmten Drehwinkel entsprechend der maximalen Achslast der Triebachse, z.B. 11,5 t, der erste Sensor von der Drehscheibe abgedeckt und somit die Steuereinheit zum automatischen Absenken der Liftachse aktiviert wird. Sollte bei Betätigung der Anfahrhilfe die zugelassene Überlastung erreicht werden, z.B. 13 t, dreht sich die Welle des Bremskraftreglers weiter, und es deckt die Drehscheibe auch den zweiten Sensor ab, welcher den Überlastschutz der Anfahrhilfe aktiviert.

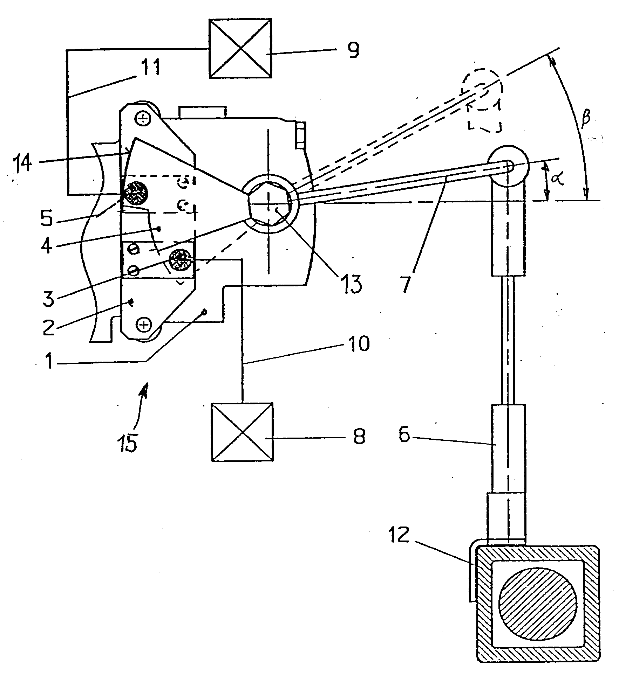

Die Erfindung wird nachfolgend anhand eines Ausführungsbeispiels unter Bezugnahme auf die beigefügte Zeichnung näher beschrieben, deren einzige Figur eine schematische Seitenansicht eines Bremskraftreglers mit der Erfindung zeigt.

Gemäß Zeichnung ist am Rahmen eines Doppelachsaggregates eines (nicht veranschaulichten) Nutzfahrzeuges ein an sich bekannter Bremskraftregler (1) veranschaulicht, dessen Drehwelle (13) fest mit einem Reglerhebel (7) verbunden ist, dessen freies Ende wiederum über ein Reglergestänge in Form einer längenverstellbaren Verbindungsstange (6) mit der Konsole der blattgefederten Triebachse (12) des Doppelachsaggregates verbunden ist. Die blatt- oder luftgefederte anhebbare Nachlaufachse des Doppelachsaggregates ist in der Zeichnung nicht gezeigt. Die Verbindungsstange (6) kann über ein anderes Reglergestänge auch indirekt mit der Konsole der Triebachse (12) verbunden sein.

Entsprechend einem individuellen Beladungszustand der Triebachse (12) ist diese mehr oder weniger eingefedert, und es nimmt der Reglerhebel (7) eine bestimmte Winkelstellung α ein.

Am Reglerhebel (7) bzw. an der Drehwelle (13) des Bremskraftreglers (1) ist nun in rückwärtiger Verlängerung des Reglerhebels eine einstückige Steuerplatte (4) in Form einer Drehscheibe befestigt. Die Drehscheibe besitzt eine Steuerkurve, welche sich im wesentlichen aus dem Umfangsprofil zweier abgesetzter Kreissegmente mit unterschiedlichen Radien und einer radialen Zwischenstufe zusammensetzt. Entsprechend dem Beladungszustand der Triebachse (12) bzw. der Winkelstellung des Reglerhebels (7) nimmt die Drehscheibe die in der Zeichnung in ausgezogener Linie dargestellte Lage ein. Auf einer im wesentlichen vertikalen planparallel zur Schwenkrichtung des Reglerhebels (7) verlaufenden Halteplatte (2) sind ein erster elektronischer Sensor (5) sowie ein zweiter elektronischer Sensor (3) befestigt.

Der erste elektronische Sensor (5) steht über eine elektrische Leitung (11) mit der Steuereinheit einer automatischen Absenkhilfe (9) der liftbaren, nicht veranschaulichten Nachlaufachse in Verbindung, während der zweite elektronische Sensor (3) über eine elektrische Leitung (10) mit einer Steuereinheit einer Anfahrhilfe (8) verbunden ist, welche für eine Aktivierung eines Überlastschutzes der Triebachse (12) vorgesehen ist.

In der in ausgezogener Linie veranschaulichten Drehstellung der Drehscheibe bzw. Steuerplatte (4) ist der erste elektronische Sensor (5) überdeckt bzw. aktiviert; entsprechend ist die Absenkhilfe (9) angesteuert, wodurch die Nachlaufachse für ein automatisches Absenken aktiviert ist. In dieser Lage der Drehscheibe bzw. Steuerplatte (4) ist der zweite elektronische Sensor (3) nicht überdeckt bzw. nicht aktiviert; entsprechend ist auch die Anfahrhilfe (8) für die erste angetriebene Achse (12) nicht aktiviert.

Bei Betätigung der Anfahrhilfe wird die Triebachse (12) zusätzlich belastet. Wird die maximal zugelassene Achslast, z.B. 13 t, bei dem Winkel β des Reglerhebels (7) erreicht, wird durch die hintere Drehscheibe der zweite elektronische Sensor (3) zusätzlich abgedeckt. Letzterer schaltet über die elektrische Leitung (10) die Steuereinheit der Anfahrhilfe (8), wodurch die Achslast der Triebachse (12) auf einen maximalen zulässigen Überlastwert, z.B. 13 t, für eine bestimmte Zeit begrenzt wird.

Die vorgenannte Steuereinheit kann auch als Geber für eine Achslastanzeige für alle blattgefederten Fahrzeuge verwendet werden.

## Patentansprüche

1. Steuereinrichtung (15) für eine anhebbare Nachlaufachse eines aus blattgefederter Triebachse (12) und blatt- oder luftgefederter Nachlaufachse bestehenden Doppelachsaggregates von Nutzfahrzeugen mit einem fahrzeugrahmenfesten lastabhängigen mechanischen Bremskraftregler (1) zur Steuerung des Bremsdrucks des Doppelachsaggregates über ein Reglergestänge,
dadurch gekennzeichnet,
daß am Bremskraftregler (1) neben einem in Abhängigkeit des Drehwinkels des Reglerhebels (7) ansprechenden ersten Sensor (5) zur Steuerung einer Absenkhilfe (9) der Nachlaufachse auch ein in Abhängigkeit des Drehwinkels des Reglerhebels (7) ansprechender zweiter Sensor (3) zur Aktivierung eines Überlastschutzes der Triebachse (12) beim Betrieb mit Anfahrhilfe (8) vorgesehen ist, wobei beide Sensoren (3, 5) mit einer gemeinsamen am Reglerhebel (7) oder an der Drehwelle (13) des Reglerhebels (7) befestigten Steuerplatte (4) in einen Schalteingriff bringbar sind.

2. Steuereinrichtung nach Anspruch 1,
dadurch gekennzeichnet,
daß die Steuerplatte (4) eine an der Drehwelle (13) des Reglerhebels (7) befestigte, in rückwärtiger Verlängerung des Reglerhebels (7) sich erstreckende Drehscheibe mit einer Steuerkurve ist.

3. Steuereinrichtung nach Anspruch 2,
dadurch gekennzeichnet,
daß die Drehscheibe sich aus zwei abgesetzten Kreissegmenten mit unterschiedlichen Kreisradien und einer Radialstufe zusammensetzt.

4. Steuereinrichtung nach den Ansprüchen 1 bis 3,
dadurch gekennzeichnet,
daß elektronische Sensoren (5, 3) vorgesehen sind.

5. Steuereinrichtung nach den Ansprüchen 1 bis 4,
dadurch gekennzeichnet,
daß erster und zweiter Sensor (5, 3) im wesentlichen gleich ausgebildet sind.

6. Steuereinrichtung nach den Ansprüchen 1 bis 5,
dadurch gekennzeichnet,
daß die Sensoren (5, 3) auf einer Halteplatte (2) angeordnet sind, die ihrerseits in oder parallel zur Schwenkebene des Reglerhebels (7) am Bremskraftregler (1) befestigt ist.

7. Steuereinrichtung nach Anspruch 6,
dadurch gekennzeichnet,
daß die Sensoren verstellbar an der Halteplatte (2) befestigt sind.

8. Steuereinrichtung nach einem der Ansprüche 1 bis 7,
dadurch gekennzeichnet,
daß der Reglerhebel (7) über eine längenverstellbare Verbindungsstange (6) mit der Triebachse (12) verbunden ist.

## Claims

1. A control device (15) for a raisable trailing axle of a double axle unit of commercial vehicles, comprising a leaf-sprung driving axle (12) and a leaf-sprung or air-sprung trailing axle, with a load-dependent mechanical brake pressure control unit (1) which is fixed to the vehicle chassis and which serves to control the brake pressure of the double axle unit via a control rod, characterised in that the brake pressure control unit (1), in addition to being provided with a first sensor (5) responding as a function of the angle of rotation of the control unit lever (7) and serving to control a lowering-assistance means (9) of the trailing axle, is also provided with a second sensor (3) responding as a function of the angle of rotation of control unit lever (7) and serving to activate an overload protection of the driving axle (12) when operating with starting-assistance means (8), wherein both sensors (3, 5) can be brought into operative engagement with a common control plate (4) secured to the control unit lever (7) or to the rotating shaft (13) of the control unit lever (7).

2. A control device according to Claim 1, characterized in that the control plate (4) is a rotating disc with a cam secured to the rotating shaft (13) of the control unit lever (7) and extending in rearward extension of the control unit lever (7).

3. A control device according to Claim 2, characterized in that the rotating disc is composed of two stepped circular segments with different radii and one radial step.

4. A control device according to Claims 1 to 3, characterised in that electronic sensors (5, 3) are provided.

5. A control device according to Claims 1 to 4, characterised in that first and second sensors (5, 3) are formed substantially the same.

6. A control device according to Claims 1 to 5, characterised in that the sensors (5, 3) are disposed on a retaining plate (2) which in turn is secured in or parallel to the pivot plane of the control unit lever (7) on the brake pressure control unit (1).

7. A control device according to Claim 6, characterised in that the sensors are mounted adjustably on the retaining plate (2)

8. A control device according to any one of Claims 1 to 7, characterised in that the control unit lever (7) is connected to the driving axle (12) via a longitudinally adjustable connecting rod (6).

## Revendications

1. Dispositif de contrôle (15) pour un essieu traîné, relevable, d'une unité en tandem à deux essieux formée par un essieu moteur (12) suspendu par les ressorts-lames et un essieu suiveur, suspendus par les ressorts-lames ou des ressorts pneumatiques, sur des véhicules utilitaires ayant un régulateur de force de freinage (1), mécanique, dépendant de la charge, solidaire du châssis du véhicule, pour commander la pression de frein du double essieu par l'intermédiaire de la tringle de réglage,
caractérisé en ce que,
le régulateur de force de freinage (1), comprend plus d'un premier capteur (5) sollicité en fonction de l'angle de rotation du levier de régulateur (7), pour commander un dispositif d'aide à l'abaissement (9) de l'essieu traîné, ainsi qu'un second capteur (3) sollicité en fonction de l'angle de rotation du levier de réglage (7), pour activer une protection contre la surcharge de l'essieu moteur (12) lorsque le dispositif d'aide au démarrage (8) fonctionne, et les deux capteurs (3, 5) peuvent être mis en prise de commutation par une plaque de commande (4), commune, fixée au levier de régulateur (7) ou à l'axe de rotation (13) du levier de réglage.

2. Dispositif de contrôle selon la revendication 1, caractérisé en ce que la plaque de commande (4) est un disque tournant muni d'une courbe de commande, ce disque fixé sur l'axe de rotation (13) du levier de réglage (7) s'étendant dans le prolongement arrière du levier de régulateur (7).

3. Dispositif de commande selon la revendication 2, caractérisé en ce que le disque tournant se compose de deux segments de cercle décalés, à rayon de courbure différent et à décrochement radial.

4. Dispositif de contrôle selon les revendications 1 à 3, caractérisé en ce qu'il comporte des capteurs électroniques.

5. Dispositif de contrôle selon les revendications 1 à 4, caractérisé en ce que le premier et le second capteur (5, 3) sont essentiellement identiques.

6. Dispositif de contrôle selon les revendications 1 à 5, caractérisé en ce que les capteurs (5, 3) sont prévus sur une plaque de fixation (12) elle-même fixée dans le plan de basculement du levier de régulateur (7) sur le régulateur de force de freinage (1) ou parallèlement à ce plan.

7. Dispositif de contrôle selon la revendication 6, caractérisé en ce que les capteurs sont fixés de manière réglable sur la plaque de fixation (2).

8. Dispositif de contrôle selon l'une des revendications 1 à 7, caractérisé en ce que le levier de régulateur (7) est relié à l'essieu moteur (12) par une tringlerie de liaison de longueur réglable.
